# EUROPÄISCHE PATENTANMELDUNG

(11) **EP 4 843 648 A1**
(43) Veröffentlichungstag der Anmeldung: **25.11.2026**
(21) Anmeldenummer: 26179912.6
(22) Anmeldetag: 20.05.2026
(51) Int. Cl.: B01D 19/00, B01D 53/14, C02F 1/20

(54) **ERNTEVORRICHTUNG ZUM AUFSETZEN AUF EINE DESORPTIONSKOLONNE ZUR RÜCKGEWINNUNG VON GASEN AUS EINER FLÜSSIGKEIT**

(30) Priorität: 21.05.2025 DE 102025119706
(71) Anmelder: Malmberg Bioerdgastech GmbH, 04442 Zwenkau (DE)
(72) Erfinder: Herrmann, Holger, 04442 Zwenkau (DE)
(74) Vertreter: Däbritz, Frank

(57) **Zusammenfassung**

Die Erfindung betrifft eine Vorrichtung für chemische Anlagen.

Beschrieben wird eine Erntevorrichtung zum Aufsetzen auf eine Desorptionskolonne zur Rückgewinnung von Gasen aus einer Flüssigkeit (beispielsweise von CO₂ aus Wasser), umfassend:
a) ein senkrechtes Rohr (1) mit einem oberen (1a) und einem unteren Ende (1b),
wobei das obere Ende (1a) des Rohres in einen luftdicht verschließbaren Unterdruckbereich (2) mündet, an den ein Unterdruck angelegt werden kann, und
b) einen Siphon (3),
wobei das untere Ende (1b) des Rohres in den Siphon (3) mündet, so dass der Siphon ein Aufsteigen von Gasen verhindert,
c) eine Flüssigkeitszuführung (4), welche zum oberen Ende (1a) des Rohres (1) führt.

## Beschreibung

Die Erfindung betrifft eine Vorrichtung für chemische Anlagen.

In Desorptionskolonnen wird großtechnisch Gas, vielfach CO₂, aus Flüssigkeiten wie Wasser abgetrennt - mit Hilfe von Luft, welche das gewonnene CO₂ verdünnt. CO₂ kann bisher nur verdünnt mit Luft aus dem Prozess einer Druckwasserwäsche erhalten werden. Andere Verfahren zur Abtrennung von CO₂ aus dem Prozess beruhen auf zusätzlichen Kolonnen, die das Wasser im Unterdruck führen und von dort mit Pumpen weiterfördern.

EP 0 114 967 A1 beschreibt beispielsweise ein Verfahren zur Desorption eines schwerlöslichen Gases aus einer Flüssigkeit.

Mit der Optimierung der Füllmaterialien von Kolonnen befasst sich GB 139 880 A.

Die Desorption in Kolonnen wird auch beschrieben von Tynell, 2005 (Seite 15, 2.2.1.1, dritter Absatz). Darin wird auch der biologische Bewuchs in Biogasseparationsanlagen beschrieben.

In Nitsche 2020 wird das generelle Design und die Auslegung von Desorptionskolonnen beschrieben.

Das Feld der Gasrückgewinnung ist ein intensiv untersuchtes Forschungsfeld (Chen 1964; Nguyen 1979; Rousseau et al. 1988; Nitsche et al. 1995).

Aufgabe der Erfindung ist es, die Abtrennung von Gasen aus Flüssigkeiten zu erleichtern, ohne dass diese mit großen Mengen Luft verdünnt werden. Die Lösung soll einfach sein, nachrüstbar sein und möglichst keine Änderungen an der Sicherheitstechnik bestehender Desorptionsanlagen erfordern.

Gegenstand der Erfindung ist eine Erntevorrichtung zum Aufsetzen auf eine Desorptionskolonne zur Rückgewinnung von Gasen aus einer Flüssigkeit, umfassend:
a) ein senkrechtes Rohr mit einem oberen und einem unteren Ende,
   wobei das obere Ende des Rohres in einen luftdicht (nach oben) verschließbaren Unterdruckbereich (im Sinne eines Kopfbereichs) mündet, an den ein Unterdruck angelegt werden kann, und
b) einen (unterhalb des Rohres befindlichen) Siphon,
   wobei das untere Ende des Rohres in den Siphon mündet, so dass der Siphon ein Aufsteigen von Gasen (durch den Siphon nach oben) verhindert,
c) eine Flüssigkeitszuführung, welche zum oberen Ende des Rohres führt.

"Desorptionskolonne" ist eine chemische Anlage, bei der Flüssigkeit von oben im Gegenstrom mit Luft von unten die Kolonne passieren und dabei die Flüssigkeit das rückzugewinnende Gas an die Luft abgibt.

Bei der Erfindung kann das Gas, bspw. Kohlenstoffdioxid (CO₂), mittels Anlegen eines Vakuums (oder generell Unterdruck) an den verschließbaren Unterdruckbereich effektiv aus der Flüssigkeit abgezogen werden. Der erfindungsgemäße Siphon trennt dabei die Räume. Im Einsatz der Erntevorrichtung wird diese auf eine bestehende Desorptionskolonne aufgesetzt und mittels des vorhandenen Deckels der üblichen Desoptionskolonnen luftdicht verschlossen. Es wird oben am Deckel ein Vakuum erzeugt und parallel durch die Flüssigkeitszuführung (die zu entgasende Flüssigkeit) in das senkrechte Rohr zugeführt. Die Flüssigkeit läuft von selbst an das untere Ende des Rohres in den Siphon und kann nach Passieren, das heißt Überlaufen, des Siphons nach unten ablaufen (sinnvollerweise durch unter dem Siphon befindliche Öffnungen, in die Desorptionskolonne).

Der "Unterdruckbereich" der Erntevorrichtung kann also auch ein nach oben offener Bereich sein, an den, im Falle des Aufsetzens der Erntevorrichtung auf eine bestehende Desorptionskolonne einer chemischen Anlage, mittels Deckel und dort befindlicher Gasabsaugung ein Unterdruck hergestellt werden kann. Der Siphon verhindert, dass von außen Luft in diesen Unterdruckbereich angesaugt werden kann.

### Vorteile

Vorteilhaft verbleibt nach Einsatz der Erntevorrichtung weniger Gas in der Flüssigkeit, welches später noch ausgewaschen werden soll. Im Falle von CO₂ in Wasser bspw. können mit der Erfindung etwa 10% bis über 75% der Menge des CO₂ (in Abhängigkeit des aufgrund der baulich individuell festgelegten, möglichen Höhe der Wassersäule innen erreichbaren Unterdruckes), aus einem Biogasreinigungsverfahren zurückgewonnen werden.

Die Vorrichtung ist durch ihre Einfachheit günstig in der Fertigung und braucht keine Änderungen an der Sicherheitstechnik der Bestandsanlage (Desorptionskolonnen). Geringe Abscheideraten führen zu geringerem Energieverbrauch der Gaswäsche - bis etwa 40 % Abscheiderate energieneutral und über 50 % wegen der nötigen Unterdruckerzeugung energieintensiver.

Die erfindungsgemäße Erntevorrichtung ermöglicht, das CO₂ unverdünnt abzuscheiden und schließt Verdünnung mit Luft aus. Die Erntevorrichtung kann in bestehende Anlagen eingefügt werden ohne Sicherheitstechnik zu verändern. Mit dem möglichen Unterdruck, gegeben durch die Bauweise der Vorrichtung, kann die Ernterate eingestellt werden. Wird die Erntevorrichtung deaktiviert, läuft der Prozess der Gasreinigung in der Desorptionskolonne ungestört weiter. Die Einrichtung benötigt im Wesentlichen keine beweglichen Teile oder Ventile sondern dichtet gegen Umgebungsluft zuverlässig durch eine Siphon-Konstruktion ab, die ein ungestörtes Abfließen der unterschiedlichen Wassermengen immer gewährleistet.

### Bevorzugte Ausführungsformen

In einer bevorzugten Ausführungsform der Erfindung handelt es sich beim Gas um Kohlenstoffdioxid (CO₂) und bei der Flüssigkeit um Wasser.

Es ist ebenfalls bevorzugte, wenn die erfindungsgemäße Erntevorrichtung aus Edelstahlblech gefertigt ist, bspw. 8mm starkem Edelstahlblech, wobei die Tassen nur mit 1,2-2mm dickem Edelstahlblech gefertigt sein können.

In einer anderen bevorzugten Ausführungsform der Erfindung umfasst der Siphon:
- eine innere Siphon-Tasse, die nach unten verschlossen ist und
- eine äußere Siphon-Tasse, welche nach unten offen ist (im Sinne eines Rohres),
so dass die Flüssigkeit vom senkrechten Rohr kommend bei Überlauf der inneren Siphon-Tasse in den Bereich zwischen innerer und äußerer Siphon-Tasse fließen und von dort durch einen Spalt zwischen unterem Ende der inneren Siphon-Tasse und unterem Ende der äußeren Siphon-Tasse abfließen kann.

Die äußere Siphon-Tasse umgibt somit die innere Siphon-Tasse.

Das erfindungsgemäße senkrechte Rohr mündet hierbei in die innere Siphon-Tasse bzw. endet kurz vor ihrem Boden.

Wie weiter unten beschrieben, kann sich am unteren Ende der äußeren Siphon-Tasse eine abschließende Platte mit Öffnungen befinden, durch die die Flüssigkeit weiter nach unten fließen kann. Andernfalls ist die äußere Siphon-Tasse nach unten gänzlich offen.

"Siphon-Tasse" bedeutet lediglich, dass vertikale Wandungen und ggfs. ein Boden (nur bei der inneren Siphon-Tasse) vorhanden sind.

Vorteilhaft erlaubt diese Siphon-Konstruktion ein effektives Sichern gegen Rückstrom von Gas nach oben in den Unterdruckbereich.

In einer bevorzugten Variante dieser Ausführung mit Siphon-Tassen ist unterhalb der inneren Siphon-Tasse eine den Siphon nach unten abschließende Platte mit Öffnungen vorhanden, so dass die Flüssigkeit durch den Spalt und durch die Öffnungen der abschließenden Platte nach unten abfließen kann. Vorteilhaft wird so ein zu schnelles Abfließen verhindert.

In einer weiteren bevorzugten Variante dieser Ausführung mit Siphon-Tassen liegt der Abstand zwischen vertikaler Wandung von innerer und äußerer Siphon-Tasse bei 5±3cm. Dies meint den oben erwähnten "Bereich zwischen innerer und äußerer Siphon-Tasse". Im Falle einer (weiter unten beschriebenen) nach oben verlaufenden Verbreiterung ist mit diesem Abstand der Abstand unterhalb der Verbreiterung gemeint, also der Abstand des Großteils der vertikalen Wandungen, dort, wo beide vertikale Wandungen noch parallel verlaufen.

Dies hat sich als besonders vorteilhaft erwiesen für die Siphon-Funktionalität im Bereich gängiger Desorptionskolonnen, welche Umfänge im Bereich von ca. 1250mm haben können.

Das Maß ist abhängig von der Größe der Erntevorrichtung. Bei sehr großen Desorptionsanlagen ist auch ein größerer Abstand möglich.

In einer anderen bevorzugten Variante dieser Ausführung mit Siphon-Tassen hat der Spalt eine Ausdehnung von 5±3cm, gemessen zwischen jeweils den untersten äußeren Ecken von innerer und äußerer Siphon-Tasse.

In einer weiteren bevorzugten Variante dieser Ausführung mit Siphon-Tassen hat die innere Tasse ein Volumen von 80 Liter ±10%. Das Volumen ist für den Einsatz so auszulegen, dass der zu erwartende maximale Unterdruck, der im Fehlerfall auftreten könnte, obwohl kein Wasser mehr fließt, und der im erfindungsgemäßen senkrechten Rohr (Steigrohr) zu einer Wasseraufnahme führt, nicht zu einer Leckage des Siphons führen kann. (der Siphon muss immer groß genug sein)

Es ist ebenfalls bevorzugt (bei der Ausführung mit Siphon-Tassen), wenn innere und äußere Siphon-Tasse eine Höhe zwischen 50 und 55 cm haben.

Es ist auch bevorzugt (bei der Ausführung mit Siphon-Tassen), wenn innere und äußere Siphon-Tasse eine rechteckige oder runde Grundform haben, besonders bevorzugt ist die rechteckige Form.

In einer weiteren bevorzugten Variante dieser Ausführung mit Siphon-Tassen haben innere und äußere Siphon-Tasse eine rechteckige Form und (bei Draufsicht auf die Tassen):
- die Länge der inneren Siphon-Tasse liegt bei 85cm±10% (also ihre Längskante), und/oder
- die Länge der äußeren Siphon-Tasse liegt bei 95cm±10%, und/oder
- die Breite der inneren Siphon-Tasse liegt bei 30cm±10% (also ihre Breitenkante), und/oder
- die Breite der äußeren Siphon-Tasse liegt bei 35cm±10%.

Besonders bevorzugt ist die Kombination aller vier Merkmale.

Es ist eine ebenfalls bevorzugte Variante dieser Ausführung mit Siphon-Tassen, wenn die äußere Siphon-Tasse am oberen Viertel ihrer vertikalen Wandung eine nach oben auslaufende Verbreiterung aufweist.

"Oben" bezieht sich immer auf die Ausrichtung der Vorrichtung beim Gebrauch, also beim Einbau in eine vorhandene Desorptionskolonne.

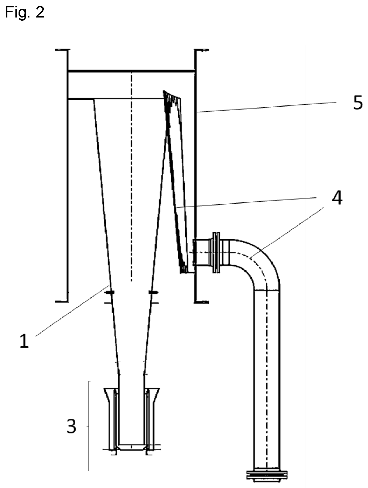

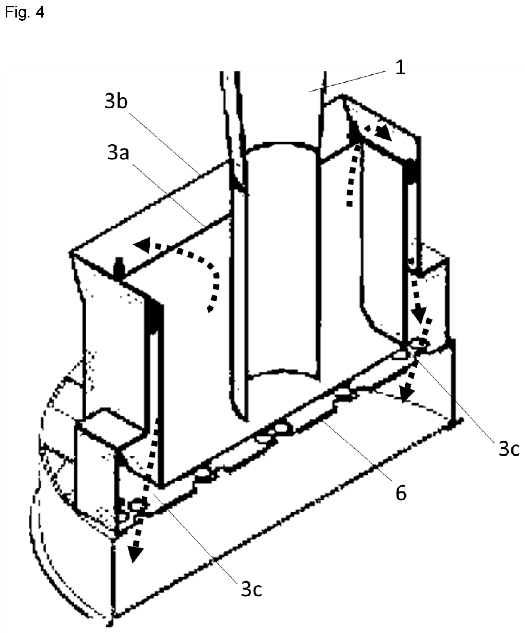

Vorteil ist, dass beim Überlaufen der inneren Tasse (geschieht fortwährend, da die Flüssigkeit so durch den Siphon geführt wird) die überlaufende Flüssigkeit vollständig von der äußeren Siphon-Tasse aufgefangen wird, ohne das Flüssigkeit daneben läuft. Die Verbreiterung ist beispielsweise in den Fig. 2 bzw. 4 zu erkennen.

Es ist ganz besonders bevorzugt, wenn dabei innere und äußere Siphon-Tasse eine rechteckige Form haben und wenn dabei die Verbreiterung nur entlang der beiden Längsseiten der äußeren Siphon-Tasse (3b) vorhanden ist (also zwei der vier Außenkanten bei Draufsicht auf die Siphon-Tasse).

Bevorzugt hat die Verbreiterung an ihrer breitesten Stelle eine Ausdehnung (also Abstand zwischen linker und rechter vertikaler Wandung an der jeweiligen Längsseite) von 53cm±10%. Die Verbreiterung selbst verbreitert bevorzugt die jeweilige Wandung um jeweils 5cm±10% nach außen.

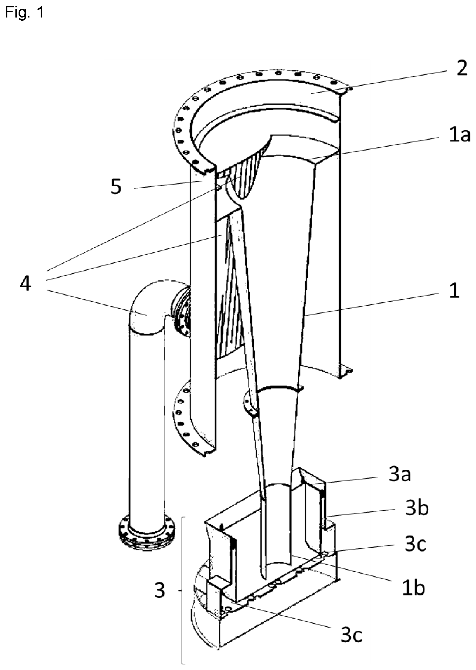

In einer weiteren, bevorzugten Ausführungsform der erfindungsgemäßen Erntevorrichtung weist das senkrechte Rohr eine Trichterform auf und verjüngt sich im Wesentlichen vom oberen Ende hin zum unteren Ende. "Im Wesentlichen" bedeutet, dass auch Unterbrechungen vorhanden sein können oder unterschiedliche Verjüngungsabstufungen. Es ist beispielsweise möglich, dass am unteren Ende des Rohres noch einmal ein gerader Abschnitt folgt, wie in Fig. 1 erkennbar.

Besonders bevorzugt ist es dabei, wenn der Durchmesser des senkrechten Rohres am unteren Ende bei 25cm±20%cm und/oder am oberen Ende bei 75cm±20% liegt.

In einem zugehörigen Verfahren sollte die Fließgeschwindigkeit im Rohr (unabhängig von der konkreten Ausführung der Anlage) <1,8m/s am unteren Ende und <0,8m/s am oberen Ende betragen, damit keine Blasen in den Siphon migrieren können.

In einer anderen bevorzugten Ausführung der Erfindung umfasst die Erntevorrichtung ein röhrenförmiges Gehäuse und
die Flüssigkeitszuführung umfasst: ein Zuführungsrohr, welches durch das Gehäuse in einen kreissegmentförmigen Hohlmantelbereich mündet, welcher nach oben zum oberen Ende des Rohres führt, so dass die Flüssigkeit vom Zuführungsrohr über den Hohlmantelbereich in das senkrechte Rohr abfließen kann.

Die Längsachse des röhrenförmigen Gehäuses verläuft sinnvollerweise parallel zur Längsachse des senkrechten Rohres. Bevorzugt hat das röhrenförmige Gehäuse einen Außendurchmesser von 125cm±20%.

"Kreissegmentförmiger Hohlmantelbereich" bedeutet, dass (wie in Fig. 1 zu sehen) über ca. 60-120° des Kreisumfangs ein solcher Hohlmantelbereich existiert. Hohlmantelbereich ist eine flächige Verbindung vom Gehäuse, an das obere Ende des Rohres mündend mit zusätzlich einer zweiten flächigen Verbindung in einem Abstand und an den Seiten verbunden, so dass durch beide flächigen Verbindungen ein Hohlmantel gebildet wird.

Besonders bevorzugt ist es bei der Ausführung mit Hohlmantelbereich, wenn das senkrechte Rohr an seinem oberen Ende zum Gehäuse hin kreisrund luftdicht abschließt, bis auf den Bereich des kreissegmentförmigen Hohlmantelbereichs. Im Bereich des Hohlmantelbereichs ist kein Abschluss zum Gehäuse vorgesehen, wie in Fig. 1 erkennbar, damit durch diesen nicht abgeschlossenen Bereich die Flüssigkeit in das senkrechte Rohr laufen kann.

Bei diesem Abschluss gibt es bevorzugt ganz oben am oberen Ende des Rohres einen horizontalen Ringbereich (mit Ausnahme eben dieser ausgenommenen Passage des kreissegmentförmigen Hohlmantelbereichs), der die Verbindung zwischen Rohr und Gehäuse herstellt. Der Ring ist bevorzugt 20cm breit (±10%). Prozentangaben bei Werten bedeuten, dass der Wert in diesem Bereich schwanken kann, hier also 18-22cm. Es sind an jeder Stelle des Dokuments bevorzugte Bereichsgrenzen ±10%, oder auch ±5%, oder sogar nur ±3%.

In einer anderen bevorzugten Ausführung der Erfindung weist das senkrechte Rohr eine Länge von 2-10m auf. Bevorzugt sind es 3,45m±10%.
Fig. 1 zeigt ausschnittsweise die erfindungsgemäße Erntevorrichtung aus Ausführungsbeispiel 1 in einer Schnittansicht.
Fig. 2 zeigt skizzenhaft einen Querschnitt.
   In beiden Figuren ist die Flüssigkeitszuführung 4 mit dem kreissegmentförmigen Hohlmantelbereich erkennbar.

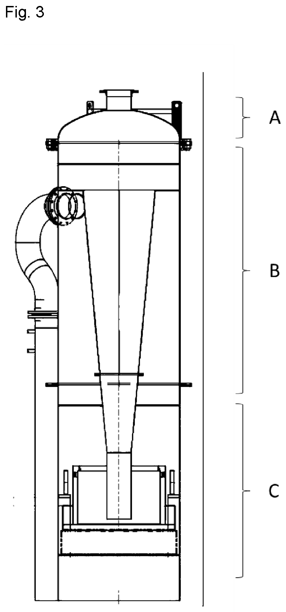

Fig. 3 zeigt die Erntevorrichtung in einer zweiten Ausführungsform mit vereinfachter Flüssigkeitszuführung - beim Einbau in eine Desorptionskolonne mit Deckel und Gasabführung aus dem Stand der Technik (wie bspw. aus EP 0 114 967 A1).
Fig. 4 zeigt eine Vergrößerung des Siphons 3 aus Fig. 1. Pfeile kennzeichnen die Fließrichtung der Flüssigkeit, wenn sie aus dem Rohr 1 in die innere Siphon-Tasse 3a überläuft in die äußere Siphon-Tasse 3b und von dort durch den Spalt 3c abfließt (durch die abschließende Platte mit Öffnungen 6).

Es ist zweckmäßig, die verschiedenen Ausführungsformen, wenn nicht anders angegeben, miteinander zu kombinieren.

Nachfolgend soll die Erfindung anhand mehrerer bevorzugter Ausführungsbeispiele eingehender erläutert werden. Sie sollen dabei die Erfindung nicht beschränken.

### Ausführungsbeispiele

### Ausführungsbeispiel 1

Die Erntevorrichtung nach Ausführungsbeispiel 1 ist schnittartig und skizzenhaft in Fig. 1 gezeigt.

Prozesswasser wird durch einen Unterdruckbereich geführt und dadurch entgast.

Das Gas ist in Ausführungsbeispiel 1 CO₂.

Es konnte gezeigt werden, dass bereits bei 270 mbar Unterdruck über 50 % des CO₂ (bezogen auf Rohgas) mit einer Reinheit über 97 % erhalten werden kann. Dabei sind die Einflüsse auf den Prozess positiv: Absorptionsdruck- und Wasserbedarf reduzieren sich. Der Schlupf kann dadurch auch reduziert werden.

Die Gasmengen lassen sich aus den Gesetzmäßigkeiten des Henry-Gesetzes für Gaslöslichkeiten herleiten.

Viele Abmessungen sind auch von der Anlagengröße abhängig, beispielsweise:
- Die Länge des senkrechten Rohres 1 (Steigrohrhöhe) legt den möglichen Unterdruck fest (der die Abscheiderate maßgeblich bestimmt),
- Der Durchmesser des senkrechten Rohrs 1 (Steigrohr-Dicke) legt die Fließgeschwindigkeit fest (sie sollte liegen bei: Eintritt Trichter <0,8 m/s, unten <1,8 m/s für die Flüssigkeit).
- Die Steigrohrhöhe und -dicke bestimmen dann über das Volumen, wieviel Wasser ,angesaugt' werden könnte (aus dem Siphon). Der Siphon benötigt daraufhin Flüssigkeitsvolumen, so dass ein Fehlerfall nicht zum Gaseintritt führt (Beispiel: Anlage steht, Saug-Gebläse aus, keine Flüssigkeit fließt, aber es wird kalt → Druck sinkt → Steigrohr voll und Tasse leer → Lufteintritt).

Im Falle von CO₂ in Wasser bspw. können mit der Erfindung 75% der Menge des CO₂, aus einem Biogasreinigungsverfahren zurückgewonnen werden.

### Bezugszeichen

- 1: Rohr
- 1a: oberes Ende (des Rohres)
- 1b: unteres Ende (des Rohres)
- 2: Unterdruckbereich (verschließbar)
- 3: Flüssigkeitszuführung
- 3a: innere Siphon-Tasse
- 3b: äußere Siphon-Tasse
- 3c: Spalt
- 4: Flüssigkeitszuführung
- 5: röhrenförmiges Gehäuse
- 6: Abschließende Platte mit Öffnungen

- A: Kopfbereich einer Desorptionskolonne aus dem Stand der Technik (mit Deckel und Gasabsaugung), wie bspw. aus EP 0 114 967 A
- B: Erfindungsgemäße Erntevorrichtung
- C: Bereich einer Desorptionskolonne aus dem Stand der Technik mit "hineinragendem" Siphon der erfindungsgemäßen Erntevorrichtung

### Nichtpatentliteratur

CHEN, Ning Hsing, Calculating theoretical plates in absorbers or strippers, Chem. Eng, 1964, 71. Jg., Nr. 10, S. 159-161.
NGUYEN, H. X., Calculating actual plates in absorbers and strippers, Chem. Eng, 1979, 84. Jg., S. 113.
ROUSSEAU, Ronald W.; STATON, J. Stephen, Analyzing chemical absorbers and strippers. Chemical Engineering, 1988, 95. Jg., Nr. 10, S. 91.
Nitsche et al, Air stripping for the water purification, in: Verfahrenstechnik (Mainz. 1983). 1995, Vol 29, Num 9, pp 23-24.
Åsa Tynell, Microbial Growth on Pall-rings -A problem when upgrading biogas with the technique absorption with water wash", Studie der Linköpings Universitet, Inst. för Tema, Avd. för Vatten i natur och samhälle 581 83 Linköping, 2005
Nitsche, M., "Absorptions- und Desorptionskolonnen". Nitsche-Planungs-Atlas. Springer Vieweg, Berlin, Heidelberg, 2020

## Patentansprüche

1. Erntevorrichtung zum Aufsetzen auf eine Desorptionskolonne zur Rückgewinnung von Gasen aus einer Flüssigkeit, umfassend:
a) ein **senkrechtes Rohr** (1) mit einem oberen (1a) und einem unteren Ende (1b),
wobei das obere Ende (1a) des Rohres in einen luftdicht verschließbaren **Unterdruckbereich** (2) mündet, an den ein Unterdruck angelegt werden kann, und
b) einen **Siphon** (3),
wobei das untere Ende (1b) des Rohres in den Siphon (3) mündet, so dass der Siphon ein Aufsteigen von Gasen verhindert,
c) eine **Flüssigkeitszuführung** (4), welche zum oberen Ende (1a) des Rohres (1) führt.

2. Erntevorrichtung nach Anspruch 1, wobei der Siphon (3) umfasst:
- eine **innere Siphon-Tasse** (3a), die nach unten verschlossen ist und
- eine **äußere Siphon-Tasse** (3b), welche nach unten offen ist,
so dass die Flüssigkeit vom Rohr (1) kommend bei Überlauf der inneren Siphon-Tasse (3a) in den Bereich zwischen innerer und äußerer Siphon-Tasse (3a, 3b) fließen und von dort durch einen **Spalt** (3c) zwischen unterem Ende der inneren Siphon-Tasse (3a) und unterem Ende der äußeren Siphon-Tasse (3b) abfließen kann.

3. Erntevorrichtung nach Anspruch 2, wobei unterhalb der inneren Siphon-Tasse (3a) eine den Siphon nach unten abschließende **Platte mit Öffnungen** (6) vorhanden ist, so dass die Flüssigkeit durch den Spalt (3c) und durch die Öffnungen der abschließenden Platte nach unten abfließen kann.

4. Erntevorrichtung nach einem der Ansprüche 2 oder 3, wobei der Abstand zwischen vertikaler Wandung von innerer und äußerer Siphon-Tasse (3a, 3b) bei 5±3cm liegt.

5. Erntevorrichtung nach einem der Ansprüche 2 bis 4, wobei der Spalt (3c) eine Ausdehnung von 5±3cm hat, gemessen zwischen jeweils den untersten äußeren Ecken von innerer und äußerer Siphon-Tasse (3a, 3b).

6. Erntevorrichtung nach einem der Ansprüche 2 bis 5, wobei die innere Tasse (3a) ein Volumen von 80 Liter ±10% hat.

7. Erntevorrichtung nach einem der Ansprüche 2 bis 6, wobei innere und äußere Siphon-Tasse (3a, 3b) eine rechteckige oder runde Form haben.

8. Erntevorrichtung nach einem der Ansprüche 2 bis 7, wobei innere und äußere Siphon-Tasse (3a, 3b) eine rechteckige Form haben und wobei
- die Länge der inneren Siphon-Tasse (3a) bei 85cm±10% und/oder
- die Länge der äußeren Siphon-Tasse (3b) bei 95cm±10% liegt und/oder
- die Breite der inneren Siphon-Tasse (3a) bei 30cm±10% und/oder
- die Breite der äußeren Siphon-Tasse (3b) bei 35cm±10% liegt.

9. Erntevorrichtung nach einem der Ansprüche 2 bis 8, wobei die äußere Siphon-Tasse (3b) am oberen Viertel ihrer vertikalen Wandung eine nach oben auslaufende Verbreiterung aufweist.

10. Erntevorrichtung nach Anspruch 9, wobei innere und äußere Siphon-Tasse (3a, 3b) eine rechteckige Form haben und wobei die Verbreiterung nur entlang der beiden Längsseiten der äußeren Siphon-Tasse (3b) vorhanden ist.

11. Erntevorrichtung nach einem der Ansprüche 1 bis 10, wobei das senkrechte Rohr (1) eine **Trichterform** aufweist und sich im Wesentlichen vom oberen Ende (1a) hin zum unteren Ende (1b) verjüngt.

12. Erntevorrichtung nach Anspruch 11, wobei der Durchmesser des senkrechten Rohres (1) am unteren Ende (1b) bei 25cm±20%cm und/oder am oberen Ende (1a) bei 75cm±20% liegt.

13. Erntevorrichtung nach einem der Ansprüche 1 bis 12, wobei die Erntevorrichtung ein röhrenförmiges Gehäuse (5) umfasst und
wobei die **Flüssigkeitszuführung** (4) umfasst: ein Zuführungsrohr, welches durch das Gehäuse (5) in einen kreissegmentförmigen Hohlmantelbereich mündet, welcher nach oben zum oberen Ende (1a) des Rohres führt, so dass die Flüssigkeit vom Zuführungsrohr in das senkrechte Rohr (1) abfließen kann.

14. Erntevorrichtung nach Anspruch 13, wobei das senkrechte Rohr (1) an seinem oberen Ende (1a) zum Gehäuse (5) hin kreisrund luftdicht abschließt bis auf den Bereich des kreissegmentförmigen Hohlmantelbereichs.

15. Erntevorrichtung nach einem der Ansprüche 1 bis 14, wobei
- das senkrechte Rohr (1) eine Länge von 2-10m aufweist.
